# EUROPÄISCHE PATENTSCHRIFT

(11) **EP 0 595 203 B1**
(45) Veröffentlichungstag und Bekanntmachung des Hinweises auf die Patenterteilung: **03.01.1996**
(21) Anmeldenummer: 93117078.1
(22) Anmeldetag: 21.10.1993
(51) Int. Cl.: B29C 45/33, B29C 45/26, B29C 45/32

(54) **Spritzgussvorrichtung**
Injection moulding apparatus
Dispositif de moulage par injection

(30) Priorität: 27.10.1992 DE 4236262
(43) Veröffentlichungstag der Anmeldung: 04.05.1994
(73) Patentinhaber: Schoeller-Plast AG, CH-1680 Romont (CH)
(72) Erfinder: Umiker, Hans, CH-8132 Egg/ZH (CH)
(74) Vertreter: Herrmann-Trentepohl, Werner, Dipl.-Ing.

(56) Entgegenhaltungen:
- EP-A- 0 061 072
- DE-A- 1 805 825
- US-A- 1 865 464
- US-A- 2 292 593

## Beschreibung

Die Erfindung betrifft eine Spritzgußform zur Herstellung von Formbehältern aus Kunststoff, insbesondere Kästen zur Aufnahme von Flaschen oder Gläsern, mit einem unteren Formteil und einem oberen Formteil zum Konturieren des Formbehälters sowie wenigstens vier äußeren, nach außen bewegbaren Backen zum Konturieren und Entformen der gespritzten Formbehälter.

Eine derartige Spritzgußform ist aus der EP-A-0 061 072 bereits bekannt. In der Regel werden zwei oder mehrere dieser Formen zu einer sogenannten Doppel- oder Mehrfachform kombiniert, um Kunststoffbehälter jeglicher Art zu produzieren. Die einzelnen Formen werden in diesem Fall über verbindende Grundaufbauten miteinander kombiniert. Der Vorteil dieser Art von Mehrfachformen liegt darin, daß im Pannenfall einer Form die andere Form weiterarbeiten kann.

Der Nachteil des vorgenannten Systems liegt allerdings darin, daß für ein Formsystem aus zwei einfachwerfenden Formen zwei an sich komplette unabhängige Systeme mit Formträgerplatten, Temperiersystem, Aufheizsystem, Kühlkanäle und dergleichen erforderlich sind. Da beide Einfachformen an sich unabhängig voneinander arbeiten, müssen diese auch allseitig entsprechend abgedichtet sein, da während des Spritzgießens ein erheblicher Druck in der Spritzgußform herrscht. Ersichtlich stellt die bekannte Lösung eines Formensystems mit zwei einfachwerfenden Formen eine relativ kostenintensive Lösung dar, die einzig einen Vorteil im Pannenfall bietet. Dieser Vorteil ergibt sich allerdings nur dann, wenn eine Panne nur an einer Einzelform auftritt. Allerdings kann es auch dazu kommen, daß durch eine Panne ein Teil betroffen ist, das zum Betrieb des Formsystems ansich erforderlich ist. Ist dies der Fall, kann das Formsystem auch mit nur einer Form nicht mehr betrieben werden.

Die Erfindung geht nunmehr einen neuen Weg, dessen Grundgedanke im Anspruch 1 wiedergegeben ist. Danach ist erfindungsgemäß vorgesehen, daß in der Spritzgußform, d.h. in einer einzigen Spritzgußform, wenigstens zwei Kavitäten angeordnet sind, die voneinander über eine Trenneinrichtung beabstandet sind. Dies bedeutet, daß in einer einzigen Spritzform gleichzeitig wenigstens zwei Kunststoffbehälter in einer Ebene hergestellt werden können. Die erfindungsgemäße Spritzgußform arbeitet systemmäßig wie eine Einfachform, wobei ansich nur eine Trenneinrichtung erforderlich ist. Bei unprofilierten Kunststoffbehältern kann es sich bei der Trenneinrichtung um einen Trennblock handeln, der fest in der Form angeordnet ist, da bei unprofilierten Behältern das Entformen keine Probleme macht.

Überraschenderweise wurde festgestellt, daß der Vorteil eines Formsystems mit zwei einfachwerfenden Formen, der sich im Pannenfall ergibt, allgemein überschätzt worden ist. Die Ausfallwahrscheinlichkeit einer Spritzgußform ist relativ gering. Da die Spritzgußform in der Regel nicht eine hundertprozentige Auslastung hat, können Reparaturen oder Wartungen auch dann durchgeführt werden, wenn die Maschine ohnehin still steht. Im übrigen liegen die systembedingten Vorteile eindeutig auf der Hand. Für die erfindungsgemäße Spritzgußform ist lediglich ein Temperiersystem, ein Aufheizsystem, eine Formträgerplatte und dgl. erforderlich. Mit anderen Worten ausgedrückt bedeutet dies, daß lediglich die Hälfte der Teile benötigt wird, die bei einem Formsystem aus zwei einfachwerfenden Formen erforderlich sind. Hierbei ist insgesamt die Summe aller Teile der Maßstab. Des weiteren muß die erfindungsgemäße Anlage, da es sich hierbei um eine Einfachform handelt, auch nur einmal eingefahren werden. Eine Abstimmung zwischen den Kavitäten ist nicht erforderlich. Die Kühlkanäle der erfindungsgemäßen Einzelform können leicht gekoppelt werden. Da mit Ausnahme der Trenneinrichtung lediglich die Hälfte der Teile eines bekannten Formsystems mit zwei einfachwerfenden Formen erforderlich ist, ist im übrigen die Reparaturanfälligkeit der erfindungsgemäßen Form viel geringer. Neben der geringen Fehlerhäufigkeit und einem, im Vergleich zum bekannten Formsystem schneller möglichen Formwechsel ergibt sich bei der erfindungsgemäßen Spritzgußform im übrigen noch eine andere Kraft- bzw. Druckverteilung beim Spritzgießen in der Form. Während bei den bekannten Einzelformen die äußeren Backen an allen Stellen entsprechend dimensioniert und abgedichtet werden mußten, ist eine derartige Abdichtung an den Seiten des Spritzgußteils, die benachbart der Trenneinrichtung angeordnet sind, nicht erforderlich, da sich die Kräfte an der Trenneinrichtung aufheben. Ersichtlich liegt bei der Erfindung nur noch ein Kraftsystem vor, während bisher zwei Kraftsysteme vorhanden waren. Die Summe der genannten Vorteile resultiert insgesamt in erheblich verringerten Kosten sowohl in der Herstellung als auch beim Betrieb der Form.

Um mit der erfindungsgemäßen Form auch Kunststoffbehälter herstellen zu können, deren Außenseiten profiliert oder mit Öffnungen versehen sind, ist weiterhin vorgesehen, daß die Trenneinrichtung innere Schieber zur Konturierung der einander zugewandten Außenseiten der Formbehälter aufweist. Wichtig ist, daß die inneren Schieber hierbei derart voneinander beabstandet sind, daß eine Bewegung der Schieber aufeinander zu zur Entformung der einander zugewandten konturierten Außenseiten des gespritzten Formbehälters möglich ist. Auf diese Weise ist nicht nur die Herstellung von unprofilierten Formbehältern, sondern auch von Formbehältern mit Außenkontur und/oder Öffnungen in der erfindungsgemäßen Spritzgußform möglich. Es wurde festgestellt, daß die Kosten zur Herstellung einer solchen Form im Vergleich zu einem Formsystem aus zwei einfachwerfenden Formen um ein Drittel gesenkt werden können, was eine erhebliche Rolle spielt, zumal die Anschaffungskosten für ein Formsystem mit zwei einfachwerfenden Formen in der Regel über DM 500.000,-- betragen.

Eine konstruktiv einfache Ausgestaltung der Erfindung sieht vor, daß die inneren Schieber entlang eines Führungskörpers verschiebbar sind. Der Führungskörper weist dabei äußere Schrägen auf, an denen die inneren Schieber über korrespondierende Schrägen aufweisen.

Die Entformungsbewegung der inneren Schieber kann hierbei einmal über den oberen Formteil, das dann als Auswerferrahmen ausgebildet ist, erfolgen. In diesem Fall sind die Schieber mit dem Auswerferrahmen verbunden. Dies bedeutet, daß, wenn der Auswerferrahmen nach Beendigung des Spritzens und Abkühlen des Kunststoffs bzw. des Formkörpers in der Form hochgefahren wird, die Schieber entsprechend ebenfalls nach oben entlang den vorgenannten Schrägen fahren. Hierbei bewegen sich die Schieber aufeinander zu, vergrößern also die Breite der Kavität, so daß eine Entformung der mittleren Konturen der einander zugewandten äußeren Behälterseiten möglich wird.

Neben der vorgenannten Möglichkeit besteht selbstverständlich auch die Möglichkeit, daß die inneren Schieber am unteren Formteil angeordnet und mit den äußeren Backen gekoppelt sind. Dies bedeutet, daß, wenn der obere Formteil zum Öffnen nach oben gefahren wird, die äußeren Backen zur Entformung nach außen bewegt werden. Gleichzeitig werden die inneren Schieber, da sie mit den Backen gekoppelt sind, aufeinander zu bewegt, so daß die Entformung der mittleren Kontur der beiden äußeren, benachbarten Behälterseiten beider Formbehälter, wie oben bereits beschrieben, ebenfalls möglich wird.

Die Anordnung und Befestigung des Führungskörpers in der Bodenplatte des unteren Formteils kann in besonders einfacher Weise dadurch erreicht werden, daß der Führungskörper in der Bodenplatte zentriert ist und hierzu wenigstens einen Zentriervorsprung aufweist, der in eine korrespondierende Nut in der Bodenplatte eingreift. Um nun auch während des Spritzens eine ordnungsgemäße Zentrierung und Halterung des Formkörpers in der Form zu erzielen, greift auch das obere Ende des Führungskörpers bei geschlossener Spritzform in eine korrespondierende Nut im oberen Formteil ein.

Zur Beschleunigung des Entformungsvorganges ist weiterhin vorgesehen, daß die inneren Schieber derart ausgebildet sind, daß der Entformungsvorgang gleichzeitig erfolgt, d.h., daß die inneren Schieber gleichzeitig bewegt werden.

Wenn für die Stirnseiten beider Formbehälter, die sich an die einander zugewandten Außenflächen anschließen, jeweils lediglich eine Backe vorgesehen ist, sind insgesamt aus vier Backen für die Konturierung von insgesamt sechs Außenflächen von im wesentlichen rechteckigen Formbehältern erforderlich. Schon aufgrund dieser Ausgestaltung ist erkennbar, daß sich die erfindungsgemäße Form in ihrem äußeren Aufbau nicht von einer einfachwerfenden Form unterscheidet, da dann ebenfalls jeweils vier Backen erforderlich sind. Dies bedeutet, daß der gesamte Bewegungsmechanismus bezüglich der äußeren Backen dem einer Einfachform entspricht.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung.

Es zeigen:
- Figur 1: eine schematische Querschnittsansicht eines Teils der erfindungsgemäßen Spritzgußform entlang der Schnittlinie I-I aus Figur 2,
- Figur 2: eine Draufsicht auf den unteren Teil der erfindungsgemäßen Spritzgußform,
- Figur 3: eine teilweise Querschnittsansicht eines oberen Formteils,
- Figur 4: eine Querschnittsansicht einer anderen Ausführungsform der erfindungsgemäßen Spritzgußform entlang der Schnittlinie IV-IV aus Figur 5 und
- Figur 5: eine Draufsicht auf die erfindungsgemäße Spritzgußform aus Figur 4 ohne Auswerferrahmen und
- Figur 6: eine Draufsicht auf eine andere Ausführungsform der Erfindung;

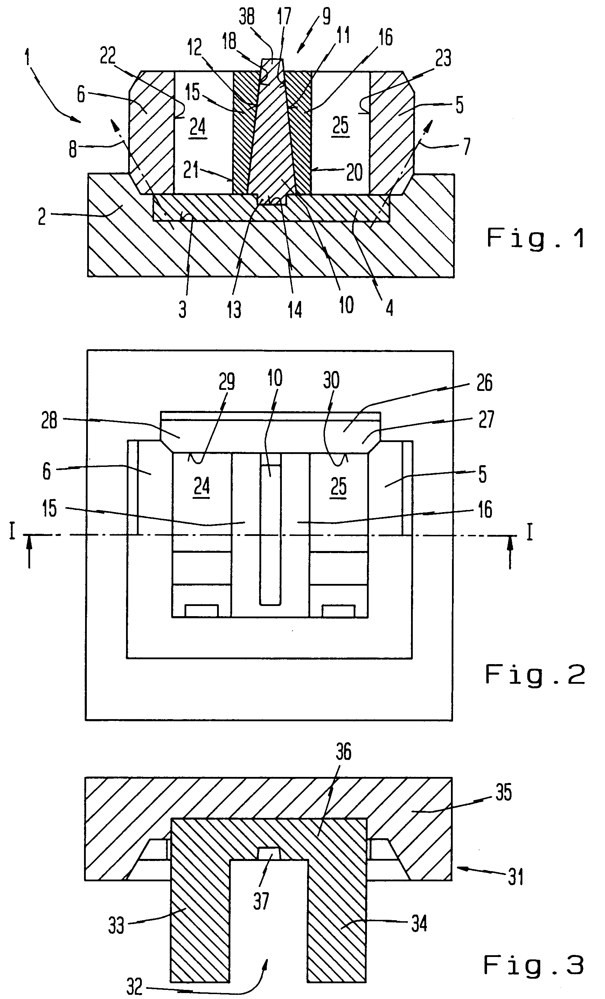

In Figur 1 ist der untere Formteil 1 der erfindungsgemäßen Spritzgußform dargestellt. Dieser untere Formteil 1 weist eine Formträgerplatte 2 auf, in der in einer entsprechenden Ausnehmung 3 eine Bodenplatte 4 angeordnet ist. Oberhalb der Bodenplatte 4 befinden sich zwei äußere Backen 5, 6, die in und entgegen der Pfeilrichtungen 7 und 8 bewegbar sind. Mittig in der Form befindet sich eine allgemein mit 9 bezeichnete Trenneinrichtung. Diese Trenneinrichtung 9 weist einen Führungskörper 10 auf, der an seinen Außenseiten Schrägen aufweist, die mit 11 und 12 bezeichnet sind. An seiner Unterseite weist der Führungskörper 10 einen Zentriervorsprung 13 auf, der in eine korrespondierende Nut 14 in der Bodenplatte 4 eingesetzt ist. An den Schrägen 11, 12 liegen zwei Schieber 15, 16 an, die auf ihren, dem Führungskörper 10 zugewandten Seiten ebenfalls Schrägen 17, 18 aufweisen, die den Schrägen 11, 12 entsprechen. Zwischen den Außenseiten 20, 21 der Schieber 15, 16 und den Innenseiten 22, 23 der Backen 5, 6 ist jeweils eine Kavität 24, 25 für jeweils einen Formbehälter ausgebildet. Dabei versteht es sich, daß die Außenseiten 20, 21 in die Innenseiten 22, 23 konturiert sind.

Die Kavitäten 24, 25 stehen mit nicht gezeigten Zuführkanälen für das Spritzgußmaterial in Verbindung. Des weiteren weist die erfindungsgemäße Form in an sich bekannter Weise ein Temperiersystem und ein Aufheizsystem sowie Kühlkanäle auf, die jedoch nicht näher gezeigt sind.

Neben den in Figur 1 gezeigten Backen 5, 6 weist die erfindungsgemäße Spritzgußform noch zwei weitere Backen auf, von denen lediglich die Backe 26 in Fig. 2 näher gezeigt ist. Die Backe 26 weist einen in der Darstellung der Figur 2 gesehen rechten Teil 27 und einen linken Teil 28 auf. Hierbei übernimmt der rechte Teil 27 der Backe 26 die Backenfunktion für die Kavität 25, während der linke Teil 28 der Backe 26 die Backenfunktion für die Kavität 24 übernimmt. Dementsprechend sind die entsprechenden Innenseiten der Backenteile 27, 28 ebenfalls konturiert. Ersichtlich ist für die Stirnflächen 29, 30 der Kavitäten 24, 25 bzw. der herzustellenden Formkörper im dargestellten Ausführungsbeispiel lediglich eine Backe, nämlich die Backe 26 erforderlich. Es versteht sich, daß, wenn sehr unterschiedliche Formkörper in den Kavitäten 24, 25 hergestellt werden, statt einer Backe 26, zwei Backen vorgesehen sein können. Vorzugsweise bietet es sich jedoch an, insbesondere wenn identische Formkörper in den Kavitäten 24, 25 hergestellt werden, lediglich eine einzige Backe 26 für die Stirnflächen 29, 30 zu verwenden. Für die gegenüberliegenden Stirnseiten können eine oder auch zwei entsprechende Backen vorgesehen sein.

In Figur 3 ist der obere Formteil 31 gezeigt. Am oberen Formteil ist eine etwa U-förmige Form 32 befestigt, deren Schenkel 33, 34 nach unten weisen. Die einander zugewandten Innenflächen der Schenkel 33, 34 der Form 32 haben vorzugsweise einen etwas größeren Abstand voneinander wie die Außenseiten 20, 21 der Schieber 15, 16 im Zustand gemäß Figur 1, um die einander zugewandten Seitenwände der herzustellenden Formkörper ausbilden zu können. Liegen die Innenflächen 20, 21 an den Innenseiten der Schenkel 33, 34 an, so muß zwischen den einander zugewandten Flächen ein entsprechender Hohlraum für die zu spritzende Seitenwand ausgebildet sein. Innerhalb der Schenkel ist eine nicht näher gezeichnete, nach unten hin offene Kontur vorgesehen, welche der herzustellende Formkörper später haben soll. Die Form 32 ist an einer Platte 35 befestigt, welche die erfindungsgemäße Spritzgußform nach oben hin abschließt. Im Verbindungsschenkel 36 befindet sich zwischen den Schenkeln 33, 34 eine Nut 37, die zur Aufnahme des oberen Endes 38 (Figur 1) des Führungskörpers 10 dient, wenn die erfindungsgemäße Form geschlossen ist. Das obere Ende 38 des Führungskörpers 10 steht, sofern sich die Schieber 15, 16 in ihrer Ausgangsstellung gemäß Figur 1 befinden, über die Oberseite der Schieber über. Schließlich ist, was aus Figur 2 ersichtlich ist, die Länge des Führungskörpers 10 geringer als die Länge der Schieber 15, 16, so daß die Schieber auch ohne weiteres gegen andere, kürzere Schieber ausgetauscht werden können, sofern andere Formbehälter hergestellt werden sollen.

Zum Betrieb der in den Figuren 1 bis 3 gezeigten Form wird der obere Formteil in den unteren Formteil 1 abgesenkt, bis die Unterseiten der Schenkel 33, 34 auf der Bodenplatte aufsetzen bzw. bis die obere Fläche des oberen Endes des Führungskörpers 10 in der Nut 37 anschlägt. Anschließend findet der eigentliche Spritzvorgang statt, wobei die Kavitäten 24, 25 und damit Schenkel 33, 34 über die Bodenplatte, in der entsprechende Zuführkanäle vorgesehen sind, vorzugsweise gleichzeitig gefüllt werden. Dabei versteht es sich, daß auch die Bodenplatte eine Kontur zur Ausbildung des Bodens haben kann. Nach Beendigung des Spritzvorgangs und Abkühlen fährt der obere Formteil 31 hoch. Dann bewegen sich die Backen 5, 6 in Pfeilrichtung 7, 8 über eine nicht näher gezeigte Einrichtung. Mit dieser Einrichtung gekoppelt sind auch die Schieber 15, 16, die entlang den Schrägen 11, 12 nach oben verschoben werden, wobei sich gleichzeitig der Abstand ihrer Außenseiten 20, 21 zueinander verringert. Hierdurch werden sämtliche Außenflächen der gespritzten Formbehälter entformt.

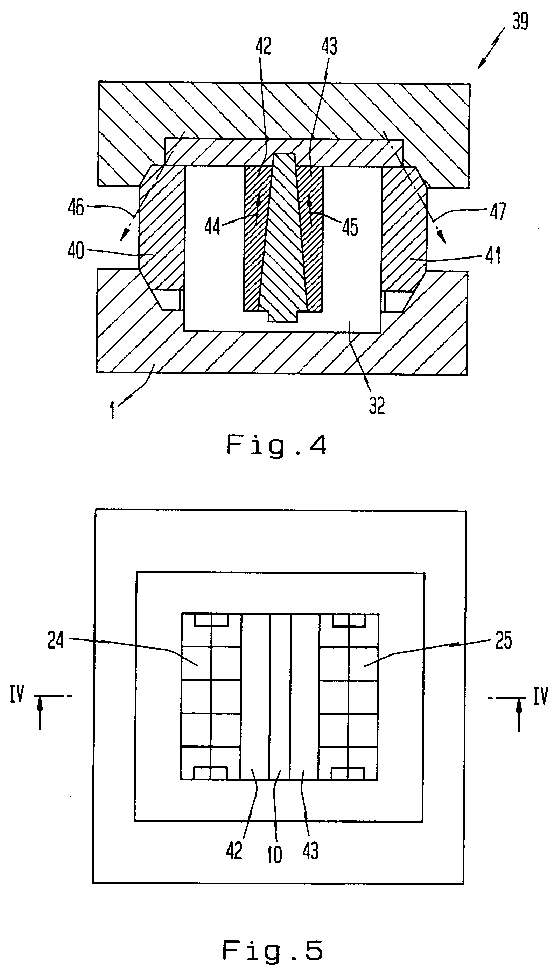

Während bei der Ausführungsform gemäß den Figuren 1 bis 3 die Schieber 15, 16 düsenseitig angeordnet und gesteuert sind, ist bei der Ausführungsform der Figuren 4 und 5 eine fahrseitige Steuerung vorgesehen. Der obere Formteil 31 ist hierbei als Auswerferrahmen 39 ausgebildet. Am Auswerferrahmen 39 sind die nach außen bewegbaren Backen 40, 41 angeordnet. Des weiteren sind die Schieber 42, 43 mit dem Auswerferrahmen 39 verbunden. Demgegenüber ist im unteren Formteil 1 die Form 32 vorgesehen, deren Schenkel in diesem Falle aber nach oben gerichtet sind. Bei der Aufwärtsbewegung des Auswerferrahmens werden die Schieber 42, 43 in Pfeilrichtung 44, 45 bewegt, während die Backen 40, 41 in Pfeilrichtung 46, 47 bewegt werden. Hierdurch werden die gespritzten Formteile aus dem Auswerferrahmen 39 freigegeben. Ansonsten beruht auch diese Form auf demselben Prinzip wie die in den Figuren 1 bis 3 beschriebene.

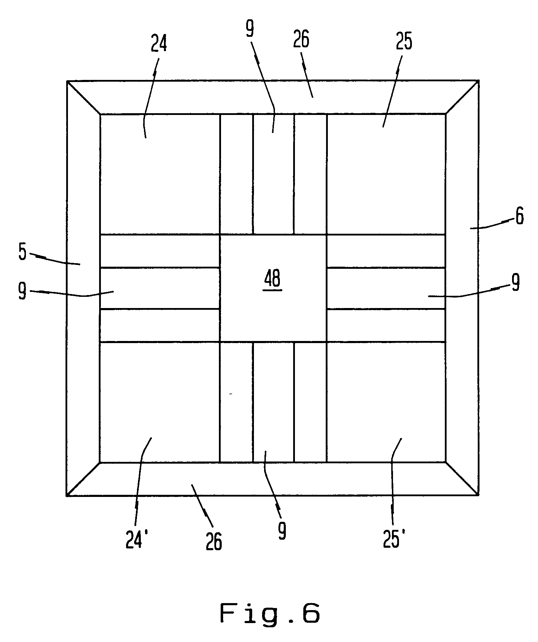

Neben der gezeigten Ausführungsform versteht sich, daß selbstverständlich mehrere übereinander angeordnete erfindungsgemäße Spritzgußformen nach dem erfindungsgemäßen Prinzip arbeiten können. Auch können in einer Ebene mehrere Kavitäten ausgebildet sein. In einem solchen Falle werden zwei oder mehr Seitenwandungen über eine Trenneinrichtung voneinander ge- und entformt. Eine erfindungsgemäße Form mit vier Kavitäten 24, 24', 25, 25', zeigt schematisch Fig. 6. Die Darstellung der Fig. 6 entspricht der Darstellung der Fig. 2, wobei das obere Formteil weggelassen wurde. Da die in Fig. 6 gezeigte erfindungsgemäße Form vier Kavitäten aufweist, versteht sich, daß auch vier Schenkel 33, 34 entsprechend Fig. 3 vorgesehen sind. Die gezeigte Form weist, wie auch die Formen aus den Fig. 1 bis 5, lediglich vier Backen 5, 6, 26 auf. Zwischen den Backen sind insgesamt vier Trenneinrichtungen 9 angeordnet, wobei benachbarte Trenneinrichtungen im rechten Winkel zueinander stehen. Die Seitenwandungen jeder Kavität werden dabei von zwei Trenneinrichtungen und von zwei Backen gebildet. Es versteht sich auch hierbei, daß statt der vier Backen eine Mehrzahl von Backen vorgesehen sein kann. Es versteht sich ferner, daß die Backen 5, 6, 26 lediglich im Bereich der Kavitäten eine Kontur aufweisen, während dies im Bereich der Trenneinrichtungen nicht erforderlich ist. Die in Fig. 6 gezeigte erfindungsgemäße Spritzgußform kann sowohl nach dem Prinzip gemäß den Figuren 1 bis 3, als auch nach dem Prinzip gemäß den Figuren 4 und 5 arbeiten. Ferner ist in Figur 6 noch ein Mittelstück 48 vorgesehen, dessen Außenseiten jeweils an die Trenneinrichtungen 9 grenzen. Das Mittelstück dichtet an den inneren Ecken der einzelnen Kavitäten ab und ist beim Spritzgießen einem allseitigen gleichmäßigen Druck ausgesetzt.

Auf eine Beschreibung des Bewegungsmechanismusses der Schieber und der Backen ist verzichtet worden, da Schieber und Backen an sich und entsprechende Bewegungsmechanismen zum Stand der Technik gehören. Der Bewegungsmechanismus der Schieber ist jedoch derart, daß diese immer entlang den schiefen Ebenen bzw. den Schrägen 17, 19 entlanglaufen. Dies kann einmal dadurch geschehen, daß die Bewegungsmechanismen auf die Schieber in entsprechender Weise einwirken, oder aber die Schieber über jeweils eine entsprechende Führung zwischen den Schrägen 11 und 12 und den Schrägen 17 und 19 geführt werden. Die Führung kann dabei derart ausgebildet sein, daß eine Bewegung entlang der Schrägen des Führungskörpers möglich ist, eine Bewegung von den Schrägen weg jedoch nicht.

## Patentansprüche

1. Spritzgußform zur Herstellung von Formbehältern aus Kunststoff, insbesondere für Transportbehälter für Kästen zur Aufnahme von Gläsern oder Flaschen, mit einem unteren Formteil (1) und einem oberen Formteil (31, 39) sowie äußeren, nach außen bewegbaren Backen (5, 6; 40, 41) zum Entformen der gespritzten Formbehälter, **dadurch gekennzeichnet**, daß in der Spritzgußform wenigstens zwei Kavitäten (24, 25) angeordnet sind, die über eine Trenneinrichtung (9) voneinander beabstandet sind.

2. Spritzgußform nach Anspruch 1, **dadurch gekennzeichnet**, daß die Trenneinrichtung innere Schieber (15, 16; 42, 43) zur Konturierung der einander zugewandten Außenseiten der Formbehälter aufweist, wobei die inneren Schieber derart einander gegenüberliegend angeordnet sind, daß eine Bewegung der Schieber aufeinander zu zur Entformung der einander zugewandten konturierten Außenseiten möglich ist.

3. Spritzgußform nach Anspruch 1 oder 2, **dadurch gekennzeichnet**, daß die inneren einander gegenüberliegenden Schieber (15, 16; 42, 43) entlang eines Führungskörpers (10) verschiebbar sind, der äußere Schrägen (11, 12) aufweist, an denen die inneren Schieber über korrespondierende Schrägen (17, 19) anliegen.

4. Spritzgußform nach einen der vorhergehenden Ansprüche, **dadurch gekennzeichnet**, daß die Schieber (42, 43) mit dem oberen Formteil (39) derart gekoppelt sind, daß die Entformungsbewegung über die Aufwärtsbewegung des oberen Formteils beim Öffnen der Spritzgußform gesteuert wird.

5. Spritzgußform nach einem der Ansprüche 1 bis 3, **dadurch gekennzeichnet**, daß die inneren Schieber (15, 16) mit dem unteren Formteil (1) gekoppelt sind, wobei die Mitnahme der inneren Schieber zur Entformungsbewegung über die äußeren Backen erfolgt.

6. Spritzgußform nach einem der vorhergehenden Ansprüche, **dadurch gekennzeichnet**, daß der Formkörper an seiner Unterseite mit dem unteren Formteil gekoppelt ist und vorzugsweise wenigstens einen Zentriervorsprung (13) aufweist, der in eine korrespondierende Nut (14) eingreift.

7. Spritzgußform nach einem der vorhergehenden Ansprüche, **dadurch gekennzeichnet**, daß das obere Ende (38) des Führungskörpers (10) bei geschlossener Spritzgußform zur Zentrierung und Haltung in eine korrespondierende Nut (37) im oberen Formteil (31, 39) eingreift.

8. Spritzgußform nach einem der vorhergehenden Ansprüche, **dadurch gekennzeichnet**, daß die inneren Schieber (15, 16; 42, 43) derart ausgebildet sind, daß die Entformungsbewegung gleichzeitig erfolgt.

9. Spritzgußform nach einem der vorhergehenden Ansprüche, **dadurch gekennzeichnet**, daß für die Stirnseiten beider Formbehälter, die sich an die einander zugewandten Außenseiten der Formbehälter anschließen, jeweils eine Backe (26) vorgesehen ist.

## Claims

1. An injection mould for producing moulded plastic containers, particularly for transport containers for crates holding glasses or bottles, the mould having a lower part (1) and an upper part (31, 39) and outer, outwardly movable jaws (5, 6; 40, 41) for removing the injection-moulded containers, characterised in that at least two cavities (24, 25) are formed in the injection mould and are spaced apart by a separating means (9).

2. An injection mould according to claim 1, characterised in that the separating means has inner sliders (15, 16; 42, 43) for contouring the facing outsides of the moulded containers, the inner sliders being disposed opposite one another so that they can move towards one another in order to release the facing contoured outsides from the mould.

3. An injection mould according to claim 1 or 2, characterised in that the facing inner sliders (15, 16; 42, 43) are movable along a guide member (10) which has outer slopes (11, 12) which abut corresponding slopes (17, 19) on the inner sliders.

4. An injection mould according to any one of the preceding claims, characterised in that the sliders (42, 43) are so coupled to the upper mould part (39) that when the mould is opened the mould-release movement is controlled via the upward motion of the upper mould part.

5. An injection mould according to any one of claims 1 to 3, characterised in that the inner sliders (15, 16) are coupled to the lower mould part (1), and during the mould-release movement the inner sliders are entrained via the outer jaws.

6. An injection mould according to any one of the preceding claims, characterised in that the underside of the moulding member is coupled to the lower mould part and preferably has at least one centring projection (13) which engages in a corresponding groove (14).

7. An injection mould according to any one of the preceding claims, characterised in that when the mould is closed, the upper end (38) of the guide member (10) engages in the upper mould part (31, 39) and is centred and held in a corresponding groove (37).

8. An injection mould according to any one of the preceding claims, characterised in that the inner sliders (15, 16; 42, 43) are so constructed so that the mould-release movement occurs simultaneously.

9. An injection mould according to any one of the preceding claims, characterised in that a jaw (26) is provided for the end faces of each of two moulded containers adjacent the facing outsides of the moulded containers.

## Revendications

1. Moule pour injection destiné à la fabrication de réservoirs moulés en matière synthétique, en particulier pour des bacs de manutention pour des caisses destinées au logement de verres ou de bouteilles, avec un préformé inférieur (1) et un préformé supérieur (31, 39) ainsi que des mâchoires extérieures mobiles vers l'extérieur (5, 6; 40, 41) pour le démoulage des réservoirs coulés par injection, caractérisé en ce qu'au moins deux cavités (24, 25) qui sont séparées l'une de l'autre par un dispositif de séparation (9) sont disposées dans le moule pour injection.

2. Moule pour injection selon la revendication 1, caractérisé en ce que le dispositif de séparation présente des curseurs intérieurs (15, 16; 42, 43) pour le profilage des faces extérieures, tournées l'une vers l'autre, des réservoirs moulés, les curseurs intérieurs étant opposés l'un à l'autre de façon à ce qu'un mouvement des curseurs l'un sur l'autre soit possible pour le démoulage des faces extérieures profilées et tournées l'une vers l'autre.

3. Moule pour injection selon les revendications 1 ou 2, caractérisé en ce que les curseurs intérieurs opposés l'un à l'autre (15, 16; 42, 43) peuvent être déplacés le long d'un corps de guidage (10) qui présente des dépouilles extérieures (11, 12) sur lesquelles aboutissent les curseurs intérieurs, par l'intermédiaire de dépouilles correspondantes (17, 19).

4. Moule pour injection selon l'une des revendications précédentes, caractérisé en ce que les curseurs (42, 43) sont couplés avec le préformé supérieur (39) de telle sorte que le mouvement de démoulage est commandé par l'intermédiaire du mouvement ascendant du préformé supérieur, lors de l'ouverture du moule pour injection.

5. Moule pour injection selon l'une des revendications 1 à 3, caractérisé en ce que les curseurs intérieurs (15, 16) sont couplés avec le préformé inférieur (1), l'entraînement des curseurs intérieurs s'effectuant, pour le mouvement de démoulage, par l'intermédiaire des mâchoires extérieures.

6. Moule pour injection selon l'une des revendications précédentes, caractérisé en ce que le corps moulé est couplé, sur sa face inférieure, avec le préformé inférieur et présente, de façon privilégiée, au moins une saillie de centrage (13) qui s'insère dans une rainure correspondante (14).

7. Moule pour injection selon l'une des revendications précédentes, caractérisé en ce que l'extrémité supérieure (38) du corps de guidage (10) s'insère, pour son centrage et son maintien, dans une rainure correspondante (37) du préformé supérieur (31,39), lorsque le moule pour injection est fermé.

8. Moule pour injection selon l'une des revendications précédentes, caractérisé en ce que les curseurs intérieurs (15, 16; 42, 43) sont conçus de telle sorte que le mouvement de démoulage s'effectue simultanément.

9. Moule pour injection selon l'une des revendications précédentes, caractérisé en ce qu'une mâchoire (26) est prévue à chaque fois pour les faces frontales des deux réservoirs moulés qui se raccordent aux faces extérieures, tournées l'une vers l'autre, des réservoirs moulés.
